# EUROPÄISCHE PATENTANMELDUNG

(11) **EP 4 628 771 A1**
(43) Veröffentlichungstag der Anmeldung: **08.10.2025**
(21) Anmeldenummer: 25167902.3
(22) Anmeldetag: 02.04.2025
(51) Int. Cl.: F16L 11/16, F16L 59/14, F16L 59/153

(54) **FLEXIBLES ROHR**

(30) Priorität: 05.04.2024 DE 102024109563
(71) Anmelder: Westa-Holding GmbH & Co. KG, 33334 Gütersloh (DE)
(72) Erfinder: Deitermann, Laurenz, 33428 Marienfeld (DE)
(74) Vertreter: DTS Patent- und Rechtsanwälte PartmbB

(57) **Zusammenfassung**

Die vorliegende Erfindung betrifft ein flexibles Rohr (100), welches mindestens eine Metall-Bandlage (102), insbesondere mindestens eine Aluminium-Bandlage (104), umfasst, wobei mindestens eine Seite der Metall-Bandlage (102) mindestens eine Vlies-Schicht (106) aufweist.

## Beschreibung

Die vorliegende Erfindung betrifft ein flexibles Rohr. Das erfindungsgemäße flexible Rohr eignet sich durch seine hohe Temperaturbeständigkeit und guten Brandeigenschaften zum einen für einen Einsatz in Motorräumen von Kraftfahrzeugen und durch seine gute Schalldämmung bei gleichzeitiger ausreichender Flexibilität für einen Einsatz in Prozessluftsystem oder im Gerätebau.

Aus der EP 0 547 569 A2 ist bereits das zugrundliegende Herstellungsverfahren bekannt.

Gemäß diesem Verfahren werden Bänder oder Bandlagen aus glattem und unterschiedlichem Material überlappend und in einzelnen Bandlagen gegeneinander versetzt auf einen Kern gewickelt und mittels einer sich um diesen Kern drehenden Rillenmutter schraubenförmig gerillt. Die Wickelsteigung bzw. der Wickelwinkel der Bänder einerseits und die schraubenförmige Rillung der zu einem Rohr gewickelten Bänder andererseits sind dabei vorzugsweise unterschiedlich im Winkel, sodass schon aufgrund dieser Maßnahme eine Festigkeit und ein Zusammenhalt der Bandlagen bei dem gewickelten und gerillten Rohr zustande kommt. Das Herstellungsverfahren begünstigt zugleich, dass diese Wickelrohre eine günstige Flexibilität beibehalten, womit beispielsweise eine einer Kontur folgende Installation derartiger gerillter Wickelrohre möglich bleibt.

Bekannt ist, dass Wickelrohre als Wärmeschutzrohre aus einer oder mehrerer Aluminium-Bandlagen und einer oder mehrerer Glasfasergewebe-Lagen gewickelt werden.

Zum Einsatz kommen derartige Rohre u.a. im Motorraum von Fahrzeugen, wo sie insbesondere durch die Glasfasergewebe-Lagen beispielsweise Kabel oder dergleichen, welche durch das Rohr geführt sind, gegen Wärmestrahlung schützen.

Durch den Glasfaseranteil in den Gewebe-Lagen sind derartige Rohre zwar gute Wärmeisolatoren, allerdings bedingt die Sprödigkeit der Glasfasern, dass diese Rohre wenig anpassbar oder flexibel sind.

Zudem ist das verwendete Glasfasergewebe gesundheitlich bedenklich. Im Umformprozess, bei der Herstellung oder bei der Montage ist nicht auszuschließen, dass durch Bruch lungengängige Faserpartikel entstehen. Diese Faserpartikel können darüber hinaus Hautirritationen hervorrufen.

Nichtsdestotrotz besteht weiterhin der Bedarf bei zunehmender Bauraumdichte im Motorraum von Kraftfahrzeugen und damit verbundenen verkleinerten Montageabständen zwischen Wärme abstrahlenden Fahrzeugkomponenten und temperaturempfindlichen Bauteilen flexible oder anpassbar Rohre einzusetzen, welche zugleich einen ausreichend hohen Wärmeschutz für die innengeführten Leitungen oder Kabel bieten.

Ferner können Wickelrohre bekanntermaßen auch als Leitungen für strömende Fluide, wie beispielsweise Luftströme, dienen, welche durch diese hindurchgeleitet werden.

In diesem Fall gibt es in Abhängigkeit des Einsatzbereichs derartiger gewickelter Rohrleitungen gewisse Anforderungen an die Schalldämpfung, um den fluidstrominduzierten Lärm und erzeugte Vibrationen zu dämpfen.

Der vorliegenden Erfindung liegt daher die Aufgabe zugrunde, ein Rohr bereitzustellen, welches bei ausreichender Anpassbarkeit oder Flexibilität einen hohen wärmetechnischen Schutz und/oder eine verbesserte Schalldämpfung bereitstellt.

Diese Aufgabe wird erfindungsgemäß durch ein flexibles Rohr mit den Merkmalen gemäß Anspruch 1 gelöst.

Das flexible Rohr kann auch in Form eines flexiblen Schlauchs ausgebildet sein.

Das flexible Rohr umfasst mindestens eine Metall-Bandlage, wobei mindestens eine Seite der Metall-Bandlage mindestens eine Vlies-Schicht aufweist.

Die Metall-Bandlage kann vorzugsweise eine Aluminium-Bandlage sein.

Die Vlies-Schicht ist vorzugsweise eine Lage aus einem flexible Flächengebilde, welches aus Fasern begrenzter Länge oder Endlosfasern zusammengefügt ist.

Die vorliegende Erfindung basiert auf der Grundidee, dass durch die Wahl geeigneter Fasern die Vlies-Schicht bei einer Anpassung des Rohres an beispielsweise den Einbauort bzw. dessen Kontur unbeschädigt bleibt und zugleich ein hoher wärmetechnischer Schutz und eine verbesserte Schalldämpfung bereitgestellt wird.

In einer Ausgestaltung der Erfindung kann vorgesehen sein, dass das flexible Rohr ein Wickelrohr ist oder als solches ausgebildet ist, bei welchem mindestens zwei Metall-Bandlagen schraubenförmig miteinander gewickelt sind und schraubenförmig gerillt sind.

Es entsteht durch diesen Umformungsprozess zwischen den einzelnen Lagen eine formschlüssige Verbindung.

Vorteilhaft kann es sein, wenn die Wickelsteigung und die Steigung der schraubenförmigen Rillung gleich oder voneinander verschieden ist.

Bei einer voneinander abweichenden Steigung ist die entstehende Festigkeit und der Zusammenhalt in der Regel höher, wobei die schraubenförmige Rillung vorzugsweise wesentlich enger als die Wickelsteigung sein sollte.

Günstig kann es ferner sein, wenn die Vlies-Schicht auf der nach innen weisenden Seite der jeweiligen Metall-Bandlage angeordnet ist.

Die Vlies-Schicht kann insbesondere auf die jeweilige Metall-Bandlage kaschiert sein.

In einer weiteren Ausgestaltung der Erfindung kann vorgesehen sein, dass auf der Vlies-Schicht eine Abdeckschicht angeordnet ist.

Diese Abdeckschicht dient vorzugsweise als Schutz gegen Feuchtigkeit oder als Schutz gegen mechanischen Abrieb.

Es kann ferner vorgesehen sein, dass das flexible Rohr außen von mindestens einer Folie ummantelt ist.

Die Folie ist vorzugsweise eine Kunststofffolie und dient dem Schutz gegen Feuchtigkeit.

Günstig kann es ferner sein, wenn zwei oder mehrere gewickelte Metall-Bandlagen miteinander verklebt sind.

Als Klebstoff kann vorzugsweise ein Reaktionsklebstoff oder ein physikalisch abbindender Klebstoff verwendet werden, welcher beim Fertigungsprozess, insbesondere beim Wickeln der Bandlagen, aktiviert wird.

Der Klebstoff ist insbesondere als Schicht auf die Seite der jeweiligen Metall-Bandlage kaschiert oder laminiert, welche der die Vlies-Schicht aufweisende Seite gegenüberliegt.

Durch die Verklebung der miteinander gewickelten Metall-Bandlagen wird zusätzlich eine stoffschlüssige Verbindung erreicht.

Der verwendete Klebstoff kann entsprechend des Einsatzzwecks des flexiblen Rohres eine unterschiedlich hohe Temperaturbeständigkeit aufweisen. Dies bedeutet, dass bei einer geringeren Wärmeabstrahlung am Einbauort die Temperaturbeständigkeit des verwendeten Klebstoff ebenfalls geringer sein kann.

Ferner kann vorgesehen sein, dass die Vlies-Schicht ein Polymer-Vlies umfasst oder als solches ausgebildet ist.

Das Polymer-Vlies ist vorzugsweise ein Vlies aus Polymer-Fasern.

In einer weiteren Ausgestaltung der Erfindung kann vorgesehen sein, dass das Polymer-Vlies oxidierte Polyacrylnitril-Fasern umfasst.

Es kann ferner vorgesehen sein, dass die oxidierten Polyacrylnitril-Fasern einen Limiting Oxygen Index von über 45 Prozent Sauerstoff aufweisen.

Die oxidierten Polyacrylnitril-Fasern (PAN-Fasern) sind vorzugsweise PANOX^{®}-Textilfasern von SGL Carbon.

Die PANOX^{®}-Fasern sind PAN-Fasern, welche bei 300 °C thermisch stabilisiert wurden. Dadurch bieten die PANOX^{®}-Fasern einen Limiting Oxygen Index (LOI) von über 45 Prozent Sauerstoff.

PANOX^{®}-Fasern zeichnen sich durch eine exzellente Brennklasse, eine hohe Temperaturbeständigkeit, eine sehr gute chemische Beständigkeit, einen hohen spezifischen elektrischen Widerstand und eine niedrige Wärmeleitfähigkeit aus. Die PANOX^{®}-Fasern sind zudem einfach in textilen Prozessen zu verarbeiten.

Günstig kann es sein, wenn das Polymer-Vlies ein Flächengewicht im Bereich von 25 g/m² bis 250 g/m², vorzugsweise von 50 g/m² bis 200 g/m², aufweist.

Vorstellbar ist ferner, dass die miteinander gewickelten Metall-Bandlagen unterschiedliche Polymer-Vlies-Schichten aufweisen, welche sich in der Dichte und/oder in der Struktur unterscheiden.

In einer weiteren Ausgestaltung der Erfindung kann vorgesehen sein, dass der Querschnitt des Rohres kreisartig oder polygonartig ausgebildet ist.

Vorzugsweise ist der Rohrquerschnitt kreisförmig oder elliptisch. Vorstellbar ist aber auch, dass der Rohrquerschnitt dreieckförmig ausgebildet ist.

In einer weiteren Ausgestaltung der Erfindung kann vorgesehen sein, dass das flexible Rohr eine Temperaturbeständigkeit von bis zu 260 °C aufweist.

In einer weiteren Ausgestaltung der Erfindung kann vorgesehen sein, dass das flexible Rohr eine Nennweite im Bereich von 10 mm bis 100 mm aufweist.

Das erfindungsgemäße flexible Rohr wird vorzugsweise als wärmetechnischer Schutz für in dem Rohr geführte Kabel, Kabelsätze, Seilzüge, Leitungen oder dergleichen verwendet.

Alternativ oder ergänzend kann das Rohr auch als dämpfende Fluidleitung verwendet werden, welche durch das strömende Fluid induzierte Lärmentwicklung und/oder Vibrationen dämpft.

Das erfindungsgemäße flexible Rohr mit PANOX^{®}-Fasern hat eine bessere Wärme-/Hitzeisolationswirkung als vergleichbare Wickelrohre mit einer PET-Vlies-Schicht oder einer Glasfasergewebe-Lage. Auch ist die Temperaturbeständigkeit sowie die Brandeigenschaften besser als bei den genannten Vergleichsrohren.

Ferner verleihen die innenliegenden Vlies-Schichten mit den PANOX^{®}-Fasern dem flexiblen Rohr ein gutes Absorptionsvermögen und gute Einfügungsdämmwerte sind in Abhängigkeit der Rohrlänge zu erreichen.

Durch die metallische Außenlage des flexiblen Rohres besitzt ein derartiges Wickelrohr eine gute Schalldämmung.

Weitere Merkmale und/oder Vorteile der Erfindung sind Gegenstand der nachfolgenden Beschreibung und der zeichnerischen Darstellung von Ausführungsbeispielen.

In den Figuren zeigen:

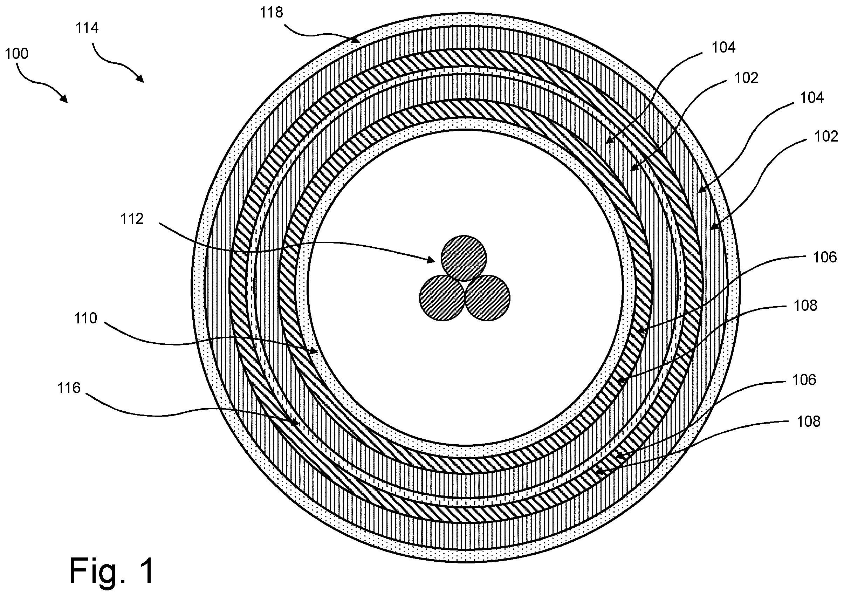

- Fig. 1: ein schematischer Querschnitt einer Ausführungsform eines erfindungsgemäßen flexiblen Rohres.

In der Fig. 1 ist ein schematischer Querschnitt einer Ausführungsform eines als Ganzes mit 100 bezeichneten flexiblen Rohres dargestellt.

Das flexible Rohr 100 umfasst zwei Metall-Bandlage 102, welche schraubenförmig miteinander gewickelt und schraubenförmig gerillt wurden, wobei die Steigung der Wickelung und der Rillung sich voneinander unterscheiden.

Bei der schematischen Querschnittsdarstellung in Fig. 1 ist die Wickelung und Rillung bewusst nicht berücksichtigt, damit auf die Abfolge der Lagen und Schichten vereinfacht beschrieben werden kann. Ferner sind die Dicken der Lagen und Schichten bzw. deren Verhältnis zueinander ebenfalls nur schematisch dargestellt.

Die Metall-Bandlagen 102 sind vorzugsweise Aluminium-Bandlagen 104.

Die nach innen weisenden Seiten der Metall-Bandlagen 102 weisen jeweils eine Vlies-Schicht 106.

Vorstellbar ist, dass sich die Lagendicken der Metall-Bandlagen 102 und die Schichtdicken der Vlies-Schichten 106 des flexiblen Rohres 100 voneinander unterscheiden.

Die Flexibilität und die Festigkeit des flexiblen Rohres 100 ist vorzugsweise durch die der Anzahl der Metall-Bandlagen 102, deren Dicke sowie durch die Art der Rillung einstellbar.

Die Vlies-Schicht 106 beinhaltet oxidierte Polyacrylnitril-Fasern 108.

Vorzugsweise weisen die oxidierte Polyacrylnitril-Fasern 108 einen Limiting Oxygen Index von über 45 % Sauerstoff auf.

Die oxidierte Polyacrylnitril-Fasern 108 sind insbesondere PANOX^{®}-Fasern.

Die Vlies-Schicht 106 der inneren Metall-Bandlage 102 ist auf ihrer nach innen weisenden Oberfläche oder Seite aluminiumkaschiert.

Alternativ oder ergänzend ist diese Oberfläche mit einer Abdeckschicht 110 versehen, welche die Vlies-Schicht 106 vor Feuchtigkeit oder mechanischem Abrieb schützt.

Es kann vorgesehen sein, dass die Vlies-Schicht 106 jeder Metall-Bandlage 102 eine Abdeckschicht 110 aufweist.

In dem flexiblen Rohr 100 sind Kabel 112 geführt, welche insbesondere durch die umgebenden Vlies-Schichten 106 aus oxidierten Polyacrylnitril-Fasern 108 gegenüber von außen auf das fleixble Rohr 100 einwirkende Wärmestrahlung geschützt sind.

Das flexible Rohr 100 ist vorzugsweise ein Wickelrohr 114, dessen Metall-Bandlagen 102 miteinander verklebt sind.

Eine Klebstoffschicht 116 ist vorzugsweise zwischen der Vlies-Schicht 106 der äußeren Metall-Bandlage 102 und der inneren Metall-Bandlage 102 angeordnet und umfasst einen Reaktionsklebstoff, welcher vorzugsweise beim Wickeln der beiden Metall-Bandlagen 102 aktiviert wird.

Das flexible Rohr 100 ist vorzugsweise ferner außen von einer Kunststofffolie 118 ummantelt, welche das flexible Rohr 100 gegen Feuchtigkeit schützt.

Die in Fig. 1 gezeigte Ausführungsform eines erfindungsgemäßen flexiblen Rohres 100 bietet gegenüber bekannten mehrlagigen Wickelrohren, welche im Bereich der Automobil-Industrie zur Anwendung kommen, zudem eine verbesserte Schalldämpfung.

Die Schalldämpfung des erfindungsgemäßen Rohres, welches nachfolgend als PAN-Rohr bezeichnet wird, wurde zum einen mit einem Rohr, welches eine außen angeordnete Aluminium-Bandlage und eine innen angeordnete Glasfasergewebe-Lage, deren nach innen weisende Oberfläche aluminium kaschiert ist, verglichen. Dieses erste Vergleichsrohr wird nachfolgend als AGA-Rohr bezeichnet.

Zum anderen wurde das PAN-Rohr mit einem zweiten Rohr verglichen, welches nachfolgend als ATA-Rohr bezeichnet wird. Das ATA-Rohr weist eine außen angeordnete Aluminium-Bandlage und eine innen angeordnete PET-Vlies-Schicht auf, deren nach innen weisende Oberfläche ebenfalls aluminiumkaschiert ist.

Die Ergebnisse des Vergleichstests in Bezug auf die Schalldämpfung können der folgenden Tabelle 1 entnommen werden.

**Tabelle 1 - Schalldämpfung in dB/m**

| | Oktavmittenfrequenz in Hz | | | | | | | |
|---|---|---|---|---|---|---|---|---|
| | 125 | 250 | 500 | 1000 | 2000 | 4000 | 8000 | dB(A) |
| PAN-Rohr | 5,2 | 5,3 | 7,6 | 7,9 | 12,8 | 23,2 | 42,5 | 11,9 |
| AGA-Rohr | 6,2 | 3,3 | 7,0 | 5,3 | 6,2 | 9,4 | 10,9 | 6,9 |
| ATA-Rohr | 6,0 | 4,6 | 7,0 | 5,0 | 5,9 | 9,3 | 10,6 | 6,7 |

Aus der vorstehenden Tabelle 1 ist ersichtlich, dass das PAN-Rohr insbesondere in dem mittleren Frequenzbereich von 1000 Hz bis 2000 Hz und dem hohen Frequenzbereich von 2000 Hz bis 8000 Hz eine signifikant bessere Schalldämpfung vorweisen kann, als die Vergleichsrohre.

Folglich stellt die Vlies-Schicht 106 mit den oxidierten Polyacrylnitril-Fasern 108 nicht nur einen Wärmeschutz sicher, sondern dämpft beispielsweise fluidströmungsinduzierten Lärm besser als bisher bekannte Wickelfalzrohre aus der Automobil-Industrie.

### Bezugszeichenliste

- 100: flexibles Rohr
- 102: Metall-Bandlage
- 104: Aluminium-Bandlage
- 106: Vlies-Schicht
- 108: oxidierte Polyacrylnitril-Fasern
- 110: Abdeckschicht
- 112: Kabel
- 114: Wickelrohr
- 116: Klebstoffschicht
- 118: Kunststofffolie

## Patentansprüche

1. Flexibles Rohr (100), welches mindestens eine Metall-Bandlage (102), insbesondere mindestens eine Aluminium-Bandlage (104), umfasst, wobei mindestens eine Seite der Metall-Bandlage (102) mindestens eine Vlies-Schicht (106) aufweist.

2. Flexibles Rohr (100) nach Anspruch 1, **dadurch gekennzeichnet, dass** das flexible Rohr (100) ein Wickelrohr (114) ist oder als solches ausgebildet ist, bei welchem mindestens zwei Metall-Bandlagen (102) schraubenförmig miteinander gewickelt sind und schraubenförmig gerillt sind.

3. Flexibles Rohr (100) nach Anspruch 2, **dadurch gekennzeichnet, dass** die Wickelsteigung und die Steigung der schraubenförmigen Rillung gleich oder voneinander verschieden ist.

4. Flexibles Rohr (100) nach einem der Ansprüche 1 bis 3, **dadurch gekennzeichnet, dass** die Vlies-Schicht (106) auf der nach innen weisenden Seite der jeweiligen Metall-Bandlage (102) angeordnet ist, insbesondere auf dieselbe kaschiert ist.

5. Flexibles Rohr (100) nach einem der Ansprüche 1 bis 4, **dadurch gekennzeichnet, dass** auf der Vlies-Schicht (106) eine Abdeckschicht (110) angeordnet ist.

6. Flexibles Rohr (100) nach einem der Ansprüche 1 bis 5, **dadurch gekennzeichnet, dass** das flexible Rohr (100) außen von mindestens einer Folie, insbesondere einer Kunststofffolie (118), ummantelt ist.

7. Flexibles Rohr (100) nach einem der Ansprüche 2 bis 6, **dadurch gekennzeichnet, dass** die mindestens zwei Metall-Bandlagen (102) miteinander verklebt sind, vorzugsweise mittels eines Reaktionsklebstoffes, welcher beim Wickeln der Bandlagen aktivierbar ist.

8. Flexibles Rohr (100) nach einem der Ansprüche 1 bis 7, **dadurch gekennzeichnet, dass** die Vlies-Schicht (106) ein Polymer-Vlies umfasst oder als solches ausgebildet ist.

9. Flexibles Rohr (100) nach Anspruch 8, **dadurch gekennzeichnet, dass** das Polymer-Vlies oxidierte Polyacrylnitril-Fasern (108) umfasst.

10. Flexibles Rohr (100) nach Anspruch 9, **dadurch gekennzeichnet, dass** die oxidierten Polyacrylnitril-Fasern (108) einen Limiting Oxygen Index von über 45 % Sauerstoff aufweisen.

11. Flexibles Rohr (100) nach Anspruch 10, **dadurch gekennzeichnet, dass** die oxidierten Polyacrylnitril-Fasern (108) PANOX^{®}-Fasern umfassen oder als solche ausgebildet sind.

12. Flexibles Rohr (100) nach einem der Ansprüche 8 bis 11, **dadurch gekennzeichnet, dass** das Polymer-Vlies ein Flächengewicht im Bereich von 25 g/m² bis 250 g/m², vorzugsweise von 50 g/m² bis 200 g/m², aufweist.

13. Flexibles Rohr (100) nach einem der Ansprüche 1 bis 12, **dadurch gekennzeichnet, dass** der Querschnitt des flexiblen Rohres (100) kreisartig, insbesondere kreisförmig oder elliptisch, oder polygonartig, insbesondere dreieckförmig, ausgebildet ist.

14. Flexibles Rohr (100) nach einem der Ansprüche 1 bis 13, **dadurch gekennzeichnet, dass** das flexible Rohr (100) eine Temperaturbeständigkeit von bis zu 260 °C aufweist.

15. Flexibles Rohr (100) nach einem der Ansprüche 1 bis 14, **dadurch gekennzeichnet, dass** das flexible Rohr (100) eine Nennweite im Bereich von 10 mm bis 100 mm aufweist.

16. Verwendung des flexiblen Rohres (100) nach einem der Ansprüche 1 bis 15 als wärmetechnischer Schutz für in dem flexiblen Rohr (100) geführte Kabel (112), Kabelsätze, Seilzüge, Leitungen oder dergleichen.

17. Verwendung des flexiblen Rohres (100) nach einem der Ansprüche 1 bis 15 als dämpfendes Fluidleitrohr für strömungsinduzierte Lärmentwicklung und/oder Vibrationen.
